Europäisches Patentamt

European Patent Office

Office européen des brevets

(19)

(11) **EP 0 821 322 B1**

(12) **FASCICULE DE BREVET EUROPEEN**

(45) Date de publication et mention
de la délivrance du brevet:
**01.10.2003 Bulletin 2003/40**

(51) Int Cl.$^7$: **G06T 5/00**

(21) Numéro de dépôt: **97202288.3**

(22) Date de dépôt: **22.07.1997**

(54) **Procédé de filtrage temporel du bruit dans une image d'une séquence d'images numérisées et dispositif mettant en oeuvre ce procédé**

Verfahren zur Zeitfilterung des Rauschens eines Bildes aus einer Sequenz von numerischen Bildern und Vorrichtung zur Ausführung dieses Verfahrens

Method for temporal filtering of the noise in an image from a sequence of digital images and apparatus therefor

(84) Etats contractants désignés:
**DE FR GB**

(30) Priorité: **24.07.1996 FR 9609307**

(43) Date de publication de la demande:
**28.01.1998 Bulletin 1998/05**

(73) Titulaire: **Koninklijke Philips Electronics N.V.**
**5621 BA Eindhoven (NL)**

(72) Inventeur: **Florent, Raoul**
**75008 Paris (FR)**

(74) Mandataire: **Lottin, Claudine**
**Société Civile S.P.I.D.**
**156, Boulevard Haussmann**
**75008 Paris (FR)**

(56) Documents cités:
**EP-A- 0 512 422          EP-A- 0 578 311**

## Description

L'invention concerne un procédé de filtrage temporel du bruit dans une image d'une séquence d'images numérisées, ainsi qu'un dispositif pour mettre en oeuvre ce procédé.

L'invention trouve particulièrement son application dans le traitement d'images médicales formées dans un mode fluoroscopique de rayons X, au moyen d'un système où le faisceau de rayons X a une faible intensité, fournissant sous forme de séquence des images numérisées bruitées et peu contrastées qui doivent être filtrées afin d'en extraire le bruit, sans en détériorer les détails.

Le filtrage temporel consiste à lisser un signal monodimensionnel appelé signal temporel, constitué par les valeurs d'intensité numérisée d'un pixel ayant une localisation donnée dans les images de la séquence, en fonction du temps.

Un procédé de filtrage temporel est déjà connu par la publication de R.E.KALMAN, intitulée "A new approach to linear filtering and prediction problems" dans "Transactions of the ASME, Journal of Basic Engineering, Series 82D, pp. 35-45, 1960.

Le filtrage de Kalman est défini par une équation récursive donnant l'intensité filtrées d'un pixel courant d'une image de la séquence en fonction d'hypothèses faites A PRIORI, en fonction de l'intensité du pixel de même localisation dans l'image précédente de la séquence et en fonction d'un facteur appelé gain de Kalman.

Cette équation peut conduire à plusieurs algorithmes récursifs. Dans un des algorithmes, le gain de Kalman est une fonction de la différence entre l'intensité bruitée observée à un instant donné et l'intensité filtrée à l'instant précédent, pour un pixel de localisation donnée. Il en résulte que, s'il apparaît une discontinuité d'intensité due à un mouvement ou à un pic de bruit, le signal temporel est lissé avant la discontinuité, mais que, par contre, il n'est plus filtré après la discontinuité. Cet algorithme n'est donc pas approprié au traitement de ce genre de discontinuité d'intensité.

Un problème est que, dû à la très faible intensité du faisceau fluoroscopique de rayons X, les images de la séquence sont extrêmement bruitées, et contiennent fréquemment des pics de bruit.

Un autre problème est que, dû au fait que chaque image de la séquence est séparée de la suivante par un petit laps de temps, un événement important comme le déplacement d'un petit outil tel qu'un cathéter, peut survenir d'une image à l'autre. Le filtrage de l'image où apparaît le mouvement de ce petit objet ne doit pas déformer ou effacer cet objet.

La présente invention vise à fournir un procédé de filtrage temporel pour la réduction du bruit, dans les images successives d'une séquence d'images numérisées :

qui travaille strictement en temps réel, c'est-à-dire qui fournisse l'image courante filtrée dès l'apparition de ladite image courante observée, immédiatement, sans retard d'image, quelle que soit la cadence des images dans la séquence,
qui soit capable d'éliminer les pics de bruit ;
qui n'efface pas et ne déforme pas les petits objets en mouvement.

Le problème d'élimination des pics de bruit en temps réel est résolu au moyen d'un procédé de filtrage temporel du bruit selon la revendication 1.

Le problème de l'élimination du bruit sans déformer les petits objets en mouvement est résolu par un tel procédé selon la revendication 5.

Un dispositif pour mettre en oeuvre ce procédé de filtrage est récité dans la revendication 7. Ce dispositif offre l'avantage d'être simple à mettre en oeuvre et de fournir strictement et exactement en temps réel un filtrage temporel du bruit efficace qui supprime les pics de bruit.

L'invention est décrite ci-après en détail, en référence avec les figures schématiques annexées dont :

la FIG.1 qui représente un dispositif de prises de vues à rayons X ;
la FIG.2 qui représente une séquence d'images numériques ;
la FIG.3A qui représente un signal temporel bruité correspondant à un pixel de localisation donnée avec un pic de bruit ;
la FIG.3B qui représente un autre signal temporel bruité, avec une discontinuité due à un mouvement ;
la FIG.4A qui représente un signal temporel filtré correspondant au signal temporel bruité de la FIG.3A ;
la FIG.4B qui représente un signal temporel bruité tel que celui de la FIG.4A, d'abord filtré par un filtre spatial ;
les FIGs.5A et 5B qui illustrent un premier et un second exemple de filtre spatiaux ;
la FIG.6 qui montre un exemple possible de fonction de modulation de l'échantillon du présent dans la fonction de filtrage temporel ;
les FIG.7A et 7B qui montrent, sous forme de blocs fonctionnels, un dispositif pour mettre en oeuvre le procédé de filtrage temporel.

### I/ Dispositif à rayons X

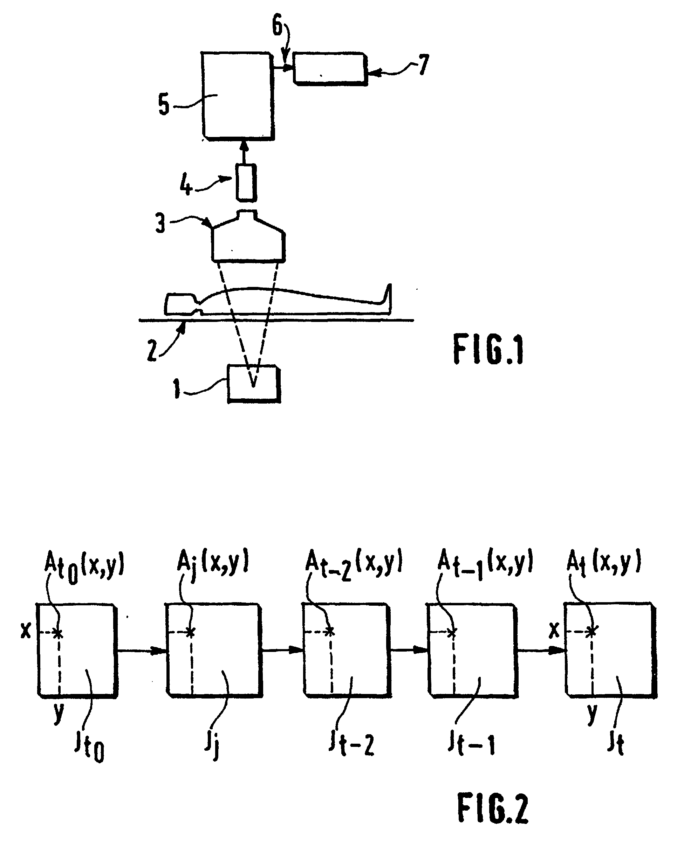

En référence à la FIG.1, dans un exemple d'application du présent procédé, un système de radiographie numérisée comprend une source 1 de rayons X ; une table 2 pour recevoir un patient ; un dispositif intensificateur d'image 3 couplé à un tube vidéo 4, qui fournit des données à un système 5 de traitement numérique d'image comprenant un microprocesseur et approprié à mettre en oeuvre le présent procédé. Ce microprocesseur comprend plusieurs sorties dont, par exemple, une sortie 6 couplée à un moniteur 7 pour la visualisation de la séquence d'images radiographiques ou des images d'intensité.

La présente invention ne tient pas compte de la méthode par laquelle la séquence d'images numériques a été obtenue, ni de la nature des objets qu'elle représente, mais concerne seulement le filtrage de ces images dans cette séquence pour éliminer le bruit et les pics de bruit.

### II/ Procédé de filtrage temporel du bruit

La présente invention propose un procédé de filtrage temporel du bruit successivement de chaque image d'une séquence d'images numériques bruitées. Ce procédé opère le filtrage de la dernière image bruitée observée. Ce procédé est donc exactement mené à bien en temps réel.

En référence à la figure 2, ce procédé comporte l'acquisition et la numérisation d'une séquence d'images bruitées composée d'images d'intensité du passé $J_j^c$ appelées "images causales", formées depuis un premier instant $t_o$ jusqu'à un instant $j = t-1$, où $t$ est un instant appelé présent ; et d'une image $J_t^p$ en cours de filtrage, appelée image du présent, arrivant à l'instant présent $j = t$. Chaque image numérisée bruitée $J_j$ est une matrice bidimensionnelle de pixels $A_j(x,y)$ repérés par leurs coordonnées x, y et par un niveau d'intensité $I_j(x, y)$.

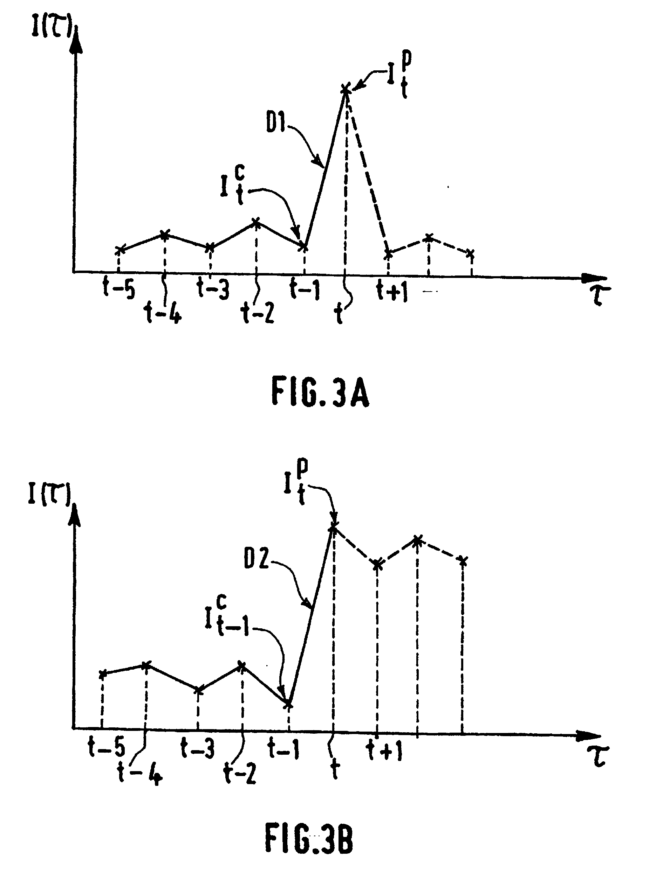

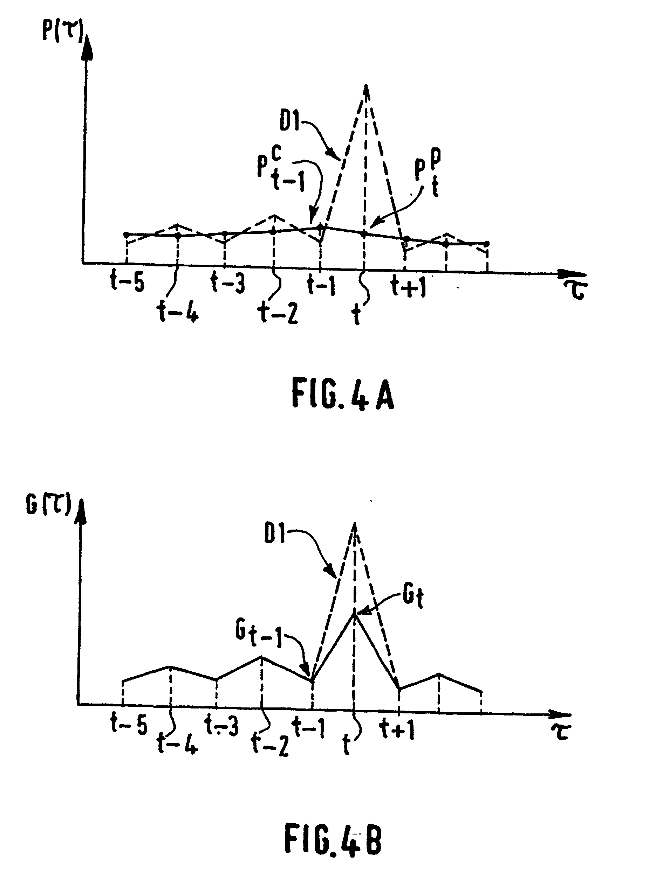

Comme représenté sur les FIG.3A et 3B, un signal temporel bruité ($I\tau$) est formé des différents niveaux d'intensité $I_j(x, y)$ à une localisation donnée x,y de pixel $A_j(x,y)$, en fonction du temps $\tau$ (lire tau). Ce procédé permet d'obtenir un signal temporel filtré $P(\tau)$, comme représenté sur la FIG.4A. On appelle "échantillons" les intensités qui sont les points des signaux temporels $I(\tau)$ et $P(\tau)$. Les échantillons du passé ou causals sont notés $I_j^c$ et l'échantillon du présent est noté $I_t^p$.

Ce procédé effectue un filtrage de l'échantillon bruité $I_t^p$ arrivé à l'instant présent t, et construit un échantillon filtré $P_t^p$. Le filtrage temporel est effectué favorablement pour chaque pixel $A_j(x,y)$ de la matrice bidimensionnelle, aux différentes coordonnées x, y, individuellement.

La FIG.3A montre un signal temporel bruité $I(\tau)$ ayant un pic de bruit D1 apparaissant dès l'instant t-1, centré sur l'instant t et disparaissant ultérieurement.

La figure 3B montre un signal temporel $I(\tau)$ bruité ayant une discontinuité d'intensité D2 arrivant à l'instant présent t sur l'échantillon $I_t^P$, due à un petit mouvement local, qui se traduit par un front de montée du signal temporel $I(\tau)$ entre l'instant t-1 et l'instant t, entre un signal substantiellement bas avant l'instant t-1, et un signal qui reste substantiellement haut après l'instant t.

Ce signal temporel montre en outre des petites dents de scie dues au bruit, le niveau d'intensité à la localisation (x,y) variant constamment, et provoquant un aspect de chute de neige dans les images de la séquence. Le filtrage permet de supprimer cet aspect en lissant à une valeur moyenne le signal temporel $I(\tau)$ relatif à un pixel donné. Ce filtrage a en outre pour but d'éliminer les pics de bruit tels que D1.

Un pic de bruit tel que D1 doit être distingué d'une discontinuité d'intensité telle que D2 pour pouvoir être éliminé. A cet effet, le présent procédé prend en compte que le pic de bruit D1 ne correspond pas à un phénomène purement spatial comme cela est le cas de la discontinuité D2, mais correspond en outre à un phénomène temporel.

L'échantillon filtré $P_t^P$ pour reconstruire l'échantillon bruité du présent $I_t^p$ s'exprime par la relation (1) :

$$P_t^P = \frac{W_1\, P_{t-1}^C + W_2\, I_t^P}{W_1 + W_2} \tag{1}$$

Selon cette relation (1) l'échantillon filtré $P_t^P$, ou signal temporel filtré à l'instant présent t, est une combinaison de l'échantillon causal filtré $P_{t-1}^C$ évalué à l'avant-dernier instant, appelé dernier échantillon causal filtré, et de l'échantillon bruité $I_t^P$ observé à l'instant présent t. Dans la formule (1) du signal filtré $P_t^P$, on affecte aux échantillons $P_{t-1}^C$, et $I_t^P$ respectivement un premier poids $W_1$ et un second poids $W_2$.

Le dénominateur de la formule (1) est un facteur de normalisation dont la présence est fondée sur le fait que la somme des poids que l'on applique aux échantillons doit être égale à 1 pour que la moyenne du signal filtré $P_t^P$ soit égale à la moyenne du signal bruité $I_t^P$.

Dans la formule (1) l'échantillon bruité du présent $I_t{}^P$ est modulé par une fonction d'une valeur de probabilité $\beta_t{}^P$ d'absence de pic de bruit à l'instant présent t. A cet effet, une détection de pic de bruit est appliquée au signal temporel à l'instant présent t, pour évaluer la valeur de probabilité $\beta_t{}^P$ d'absence de pic de bruit, et le poids $W_2$ affecté à l'échantillon bruité du présent $I_t{}^P$ dans la combinaison (1) est de préférence une fonction de cette valeur de probabilité $\beta_t{}^P$. Dans un exemple approprié, ce second poids est tel que :

$$W_2 = \beta_t{}^P \tag{2}$$

En référence à la FIG.7A, qui illustre le présent procédé au moyen de blocs fonctionnels, la détection de pic de bruit sur l'échantillon bruité du présent $I_t{}^P$ comprend :

un passage 101 d'un filtre spatial G sur l'échantillon bruité du présent $I_t{}^P$, pour évaluer un échantillon lissé du présent $G_t{}^P$,
une évaluation 103 d'une première différence $\Delta 1$ effectuée entre l'échantillon bruité du présent $I_t{}^P$ et l'échantillon lissé du présent

$$G_t{}^P : \Delta 1 = I_t{}^P - G_t{}^P \tag{3}$$

une évaluation 104 d'une seconde différence $\Delta 2$ effectuée entre l'échantillon bruité du présent $I_t{}^p$ et le dernier échantillon causal bruité

$$I_{t-1}^C : \Delta 2 = I_t{}^P - I_{t-1}^C \tag{4}$$

une comparaison 107 des signes de deux différences $\Delta 1$ et $\Delta 2$,
une évaluation 110 d'une variable $Z_t{}^P$ supérieure ou égale à zéro telle que $Z_t{}^P \geq 0$. L'évaluation de la variable $Z_t{}^P$ est une mesure de présomption de présence de pic de bruit à l'instant présent t. En effet, un pic de bruit est un phénomène transitoire à la fois dans le domaine spatial et dans le domaine temporel.

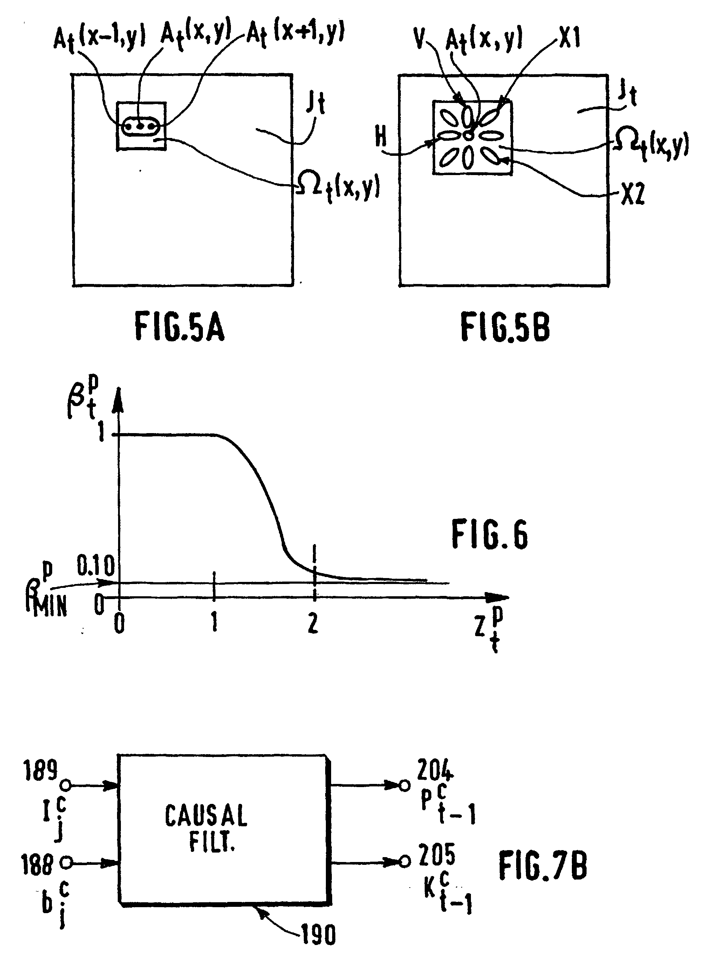

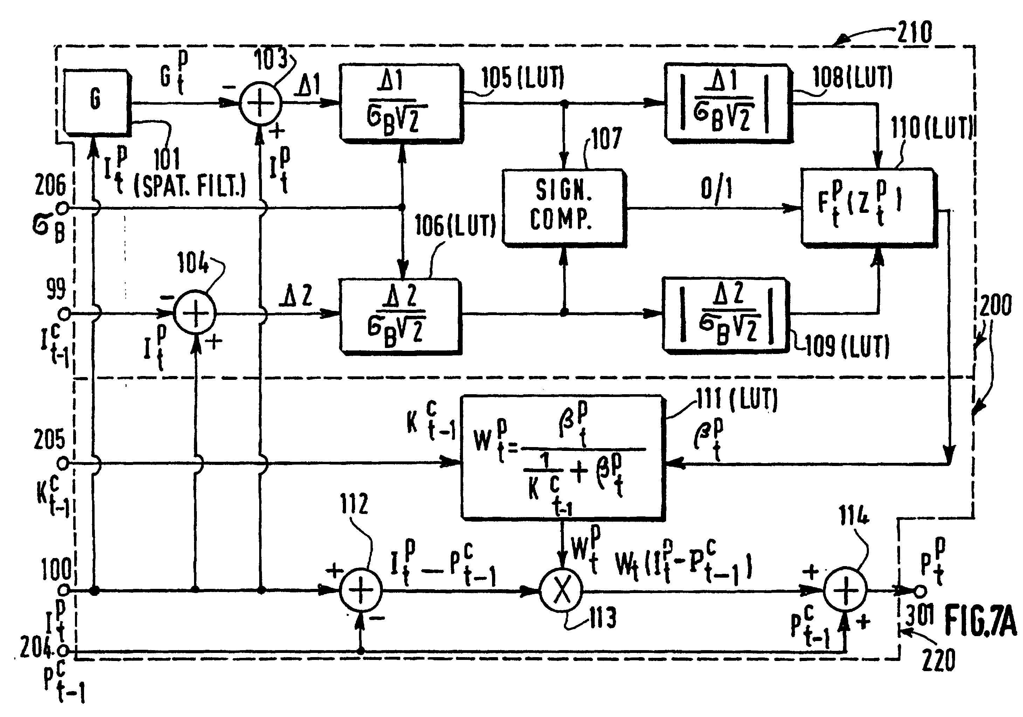

L'évaluation 103 de la première différence $\Delta 1$ entre l'échantillon bruité $I_t{}^P$ à l'instant t et l'échantillon filtré spatialement $G_t{}^P$ relatif au même instant permet de mettre en évidence l'aspect transitoire dans le domaine spatial.
Pour réaliser le filtrage spatial de l'échantillon bruité à l'instant du présent t, toute fonction G de filtrage spatial qui supprime les pics locaux de signal, ou les extrema locaux de signal, est appropriée à être utilisée. Ce filtrage spatial peut être du type passe-bas, ou bien de préférence du type médian hybride tel que décrit par exemple dans la publication intitulée "A new Class of Detail Preserving Filters for Image Processing" par Ari NIEMINEN et alii, dans IEEE Transactions on Patterns Analysis and Machine Intelligence, vol. PAMI.9, N°1, Jan.1987. De préférence, selon l'invention, un des filtres spatiaux 101 tels que décrits ci-après, sera appliqué au signal bruité $I_t{}^P$.
En référence à la FIG.5A, dans un premier exemple de filtre spatial 101, on fait passer sur l'image $J_t$ à traiter, et au pixel $A_t (x, y)$, un filtre médian de quelques pixels, par exemple 3 pixels. Dans une petite fenêtre $\Omega_t (x, y)$, ce filtre 101 centré sur le pixel courant At (x, y) calcule l'intensité des 3 pixels adjacents, sur une direction donnée, par exemple horizontale, ordonne leurs valeurs d'intensité de la plus petite à la plus grande intensité et retient comme intensité filtrée, l'intensité autre que la plus petite et la plus grande, appelée intensité médiane. Cette intensité médiane $G_t{}^P$ est affectée au pixel courant $A_t (x, y)$.
En référence à la FIG.5B dans un second exemple de filtre spatial 101, on fait passer sur l'image $J_t$ à traiter et au pixel $A_t (x, y)$, un filtre médian délimité par une fenêtre $Q_t (x, y)$ centrée en x, y, ce filtre ayant plusieurs orientations possibles par exemple une orientation horizontale appelée H, une orientation verticale appelée V, et des orientations selon une première diagonale appelée X1, et selon une seconde diagonale appelée X2.
La valeur médiane est d'abord déterminée sur chaque orientation. Puis deux nouvelles valeurs médianes sont déterminées en prenant le résultat des deux orientations H et V avec l'intensité du point central $A_t (x, y)$ d'une part, et le résultat des deux orientations X1 et X2 d'autre part avec l'intensité de point central $A_t (x, y)$. Enfin, une dernière valeur médiane est déterminée en prenant ces deux valeurs nouvelles avec l'intensité de point central $A_t (x, y)$. Cette dernière valeur médiane $G_t{}^P$ est affectée au point central $A_t (x, y)$.
L'évaluation 104 de la seconde différence $\Delta 2$ entre les deux échantillons consécutifs dans le temps formés par l'échantillon $I_t{}^P$ bruité à l'instant t et l'échantillon bruité $I_{t-1}^C$ à l'instant précédent t-1, permet de mettre en évidence l'aspect transitoire dans le domaine temporel.

La présence d'un phénomène transitoire à la fois dans le domaine spatial et dans le domaine temporel, c'est-à-dire la présence d'un pic de bruit, est détectée lorsque les différences $\Delta 1$ et $\Delta 2$ évaluées sont cohérentes et montrent une variation d'intensité dans le même sens, ce qui est concrétisé par une identité des signes de ces deux différences $\Delta 1$, $\Delta 2$.

La présence de pic de bruit est présumée nulle lorsque les signes des différences $\Delta 1$, $\Delta 2$ sont différents :

$$Z_t^P = 0 \tag{5}$$

La présence de pic de bruit est présumée avérée lorsque les signes des différences $\Delta 1$, $\Delta 2$ sont les mêmes :

$$Z_t^P \neq 0 \tag{6}$$

La présomption de présence de pic de bruit est alors mesurée selon l'invention par la relation :

$$Z_t^P = \text{Min} \left( |\Delta 1|, |\Delta 2| \right) \tag{7}$$

A cet effet, le procédé comprend l'évaluation 108, 109 des valeurs absolues des différences $\Delta 1$ et $\Delta 2$

$$|\Delta 1| = |I_t^P - G_t^P| \tag{8}$$

$$|\Delta 2| - |I_t^P - I_{t-1}^C| \tag{9}$$

et la mesure $Z_t^P$ de présomption de présence de pic de bruit est prise comme la plus petite valeur entre les deux valeurs absolues des différences $\Delta 1$, $\Delta 2$.

Le procédé comprend alors l'évaluation 110 d'une probabilité d'absence de pic. Cette probabilité $\beta_t^P$ est évaluée comme une fonction $F_t^P$ non strictement décroissant de la variable $Z_t^P$ selon la relation :

$$\beta_t^P = F_t^P (Z_t^P) \tag{10}$$

Pour éviter que le procédé de filtrage temporel, incluant ces étapes de détection de pic de bruit et d'évaluation de probabilité ne donne des résultats aberrant dans les cas où en même temps :

il existe une discontinuité d'intensité réelle dans le passé, ce qui implique que le précédé ne peut pas s'appuyer sur les échantillons causals précédant la discontinuité,
il existe un pic de bruit à l'instant présent, ce qui implique que le procédé ne peut pas s'appuyer sur l'échantillon présent, alors on interdit à la fonction décroissante $F_t^P$ de prendre la valeur zéro. Cela signifie que, selon le procédé, la probabilité $\beta_t^P$ d'absence de pic à l'instant courant t n'est jamais nulle

$$\beta_t^P \neq 0 \tag{11}$$

En référence à la FIG.6, une courbe représentative possible de la probabilité $\beta_t^P$ en fonction de la variable $Z_t^P$ montre à titre d'exemple que :

la probabilité $\beta_t^P$ d'absence de pic vaut 1 lorsque la valeur $Z_t^P$ de présomption de présence de pic vaut 0,
la probabilité $\beta_t^P$ d'absence de pic reste proche de 1 pour les valeurs $Z_t^P$ de présomption de présence de pic inférieures à 1,
la probabilité $\beta_t^P$ d'absence de pic tend vers une valeur $\beta_{MIN}^P$ pour les valeurs $Z_t^P$ de présomption de présence de pic supérieures à 2.

Dans la formule (1), le poids $W_2$ de l'échantillon du présent $I_t^P$ est pris égal à la probabilité $\beta_t^P$ d'absence de

pic. Lorsque la probabilité d'absence de pic est 1, il y certitude d'absence de pic, et la confiance qui doit être accordée à l'échantillon du présent $I_t^P$ est grande. Pour traduire ce fait, le poids $W_2$ associé à l'échantillon du présent $I_t^P$ a la valeur 1 comme la probabilité $\beta_t^P$, soit :

$$W_2 = \beta_t^P = 1 \qquad (12)$$

Lorsque la probabilité d'absence de pic $\beta_t^P$ est de l'ordre de $\beta_{MIN}$, c'est-à-dire a une valeur faible, il y a quasi-certitude de présence de pic et la confiance accordée à l'échantillon du présent $I_t^P$ est faible. Pour traduire ce fait, le poids associé à l'échantillon du présent prend une valeur faible, par exemple :

$$W_2 = \beta_{MIN} = 0,1 \qquad (13)$$

Entre ces deux valeurs, l'échantillon du présent $I_t^P$ est modulé, dans la formule (1), par la valeur de la probabilité $\beta_t^P$ calculée comme décrit plus haut en fonction des différences $\Delta 1$ et $\Delta 2$.

Il est souhaitable que la courbe $\beta_t^P$ en fonction de la variable $Z_t^P$ ne dépende pas du bruit. Pour obtenir ce résultat, chacune des différences $\Delta 1$ et $\Delta 2$ est normalisée par l'écart type du bruit $\sigma_B$, qui est une notion connue de l'homme du métier.

On rappelle que l'écart type du bruit $\sigma_B$ est la racine carrée de la variance du bruit $\sigma_B^2$ relative à un échantillon donné. La variance du bruit est la moyenne des écarts au carré du bruit dans la région considérée de l'image $J_t$ par rapport à la moyenne locale d'intensité dans cette région.

Pour chaque différence $\Delta 1$, $\Delta 2$, la variance du bruit est approximativement $2\sigma_B^2$. Il en résulte que l'écart type du bruit est approximativement $\sigma_B \sqrt{2}$.

Les différences utilisées sont donc de préférence les différences normalisées $\Delta 1$ et $\Delta 2$ données par les relations :

$$\Delta 1 = \frac{I_t^P - G_t^P}{\sigma_B \sqrt{2}} \qquad (14)$$

$$\Delta 2 = \frac{I_t^P - P_{t-1}^C}{\sigma_B \sqrt{2}} \qquad (15)$$

D'où il résulte que :

$$Z_t^P = \mathrm{Min}\left(\frac{|\Delta 1|}{\sigma_B \sqrt{2}}, \frac{|\Delta 2|}{\sigma_B \sqrt{2}}\right)$$

Le procédé décrit plus haut permet de distinguer un pic de bruit comme montré sur la FIG.3A d'une discontinuité comme montrée sur la FIG.3B, permet de prendre en compte un tel pic de bruit, et d'éliminer ce pic de bruit comme montré sur la FIG.4A.

Dans ce procédé, le dernier échantillon causal filtré doit être calculé par un filtrage temporel qui peut être un procédé récursif ou non récursif connu de l'homme du métier. De préférence, le dernier échantillon causal est calculé par une seconde combinaison telle que :

$$P_{t-1}^C = \frac{\sum_{j=t_0}^{j=t-1} b_j^C \times I_j^C}{\sum_{j=t_0}^{j=t-1} b_j^C} \qquad (17)$$

où $I_j{}^c$ représente les échantillons causals bruités, prélevés dans les images de la séquence, à une localisation $A_t(x,y)$ donnée de pixel, du premier instant to, jusqu'à l'avant-dernier instant t-1, et où $b_j{}^c$ représente des poids associés respectivement à chaque échantillon de même indice. La seconde combinaison est normalisée par la somme des poids $b_j{}^c$.

Dans un exemple de mise en oeuvre du procédé, les poids $b_j{}^c$ peuvent être des constantes affectées respectivement aux échantillons causals, déterminées empiriquement par l'homme du métier. Dans ce cas, cependant, le problème du mouvement des très petits objets n'est pas complètement résolu.

De préférence, un poids $b_k{}^C$ d'un échantillon donné causal $I_k{}^C$ est le produit des probabilités d'absence de discontinuité $\alpha^C{}_j$, effectué entre cet échantillon causal donné $I_k{}^C$ et l'échantillon bruité du présent $I_t{}^P$.

Par discontinuité, on entend une discontinuité d'intensité entre deux échantillons consécutifs de la suite d'échantillon causals, due à un mouvement, et donc liée à un phénomène spatial, comme par exemple montré sur la FIG.3B en 2D.

$$\text{Ainsi : } b_k{}^C = \prod_{j=k+1}^{j=t} \alpha_j{}^C \qquad (18)$$

A titre d'exemple, la formulation du poids causal $b_{t-1}^C$ lié à l'échantillon causal bruité $I^C{}_{t-1}$ est :

$$b_{t-1}^C = \alpha_t^C \qquad (19)$$

qui est la probabilité d'absence de discontinuité entre les échantillons $I_{t-1}^C$ et $I_t{}^P$. Et la formulation du poids causal $b_{t-2}^C$ lié à l'échantillon causal bruité $I_{t-2}^C$ est :

$$b_{t-2}^C = \alpha_t^C \times \alpha_{t-1}^C \qquad (20)$$

etc.

Il résulte de cette formulation, que si une discontinuité d'intensité telle que D2 intervient entre l'instant où arrive l'échantillon $I_k{}^C$ et l'instant où arrive l'échantillon du présent $I_t{}^P$, alors ledit échantillon $I_k{}^C$ est peu pris en compte dans la seconde combinaison car son poids est faible. Seuls les échantillons pour lesquels il y a continuité d'intensité jusqu'à l'échantillon du présent sont fortement pris en compte dans la seconde combinaison de la relation (17).

Selon le procédé de filtrage temporel du bruit et des pics de bruit, dans la formule (1), le dernier échantillon causal filtré est évalué selon la formule (17) et le poids $W_1$ qui lui est associé est donné par ladite somme des poids de la seconde combinaison :

$$W_1 = \sum_{j=to}^{j=t-1} b_j{}^C \qquad (21)$$

D'une manière préférée, on pose, à titre de simplification, l'expression :

$$\sum_{j=to}^{j=t-1} b_j{}^C = \frac{1}{k_{t-1}^C} \qquad (22)$$

L'expression de la formulation (1) de la première combinaison pour obtenir le filtrage des pics de bruit utilise alors de manière avantageuse l'expression d'un troisième poids $W_t{}^P$ donnée par :

$$W_t^P = \frac{\beta_t^P}{\frac{1}{K_{t-1}^C} + \beta_t^P} \qquad (23)$$

de telle manière que l'évaluation de l'échantillon filtré du présent soit donnée par la relation :

$$P_t^P = (1-W_t^P)P_{t-1}^C + W_t^P I_t^P \qquad (24a)$$

qui est équivalente à la formulation :

$$P_t^P = P_{t-1}^C + W_t^P (I_t^P - P_{t-1}^C) \qquad (24b)$$

ou bien

$$P_t^P = \frac{W_1 P_{t-1}^C + W_2 I_t^P}{W_1 + W_2} \qquad (1)$$

ou encore équivalente à l'expression :

$$P_t^P = \frac{\frac{1}{K_{t-1}^C} \times P_{t-1}^C + \beta_t^P \cdot I_t^P}{\frac{1}{K_{t-1}^C} + \beta_t^P} \qquad (25)$$

qui montre que dans la première combinaison (1) l'échantillon du présent $I_t^P$ est modulé par un coefficient de probabilité $\beta_t^P = W_2$ d'absence de pic de bruit et que l'avant-dernier échantillon causal $P_{t-1}^C$ a pour poids $W_1$ la somme des poids $1/K_{t-1}^C$ de la seconde combinaison (17) qui permet la détermination dudit échantillon.

En utilisant la méthode préférentielle qui vient d'être décrite pour la détermination de l'avant-dernier échantillon causal filtré et de son poids W1, le problème de l'élimination du bruit sans déformer ou effacer les petits objets en mouvement provoquant des discontinuités spatiales telles que D2 de la FIG.3B, est complètement résolu.

Les première, seconde et troisième combinaisons peuvent être respectivement linéaires.

**III/ Dispositif pour mettre en oeuvre le procédé de filtrage**

La formule (24b) est aisément évaluable par des moyens de calcul simple, comme il est décrit ci-après.

En référence aux FIG.7A et 7B, un dispositif simple pour mettre en oeuvre le procédé de filtrage proposé est décrit sous forme de blocs fonctionnels.

Ce dispositif comprend d'abord des moyens non représentés, pour extraire les échantillons bruités relatifs à un pixel $A_j(x,y)$ de localisation donnée x,y dans les images numériques, du premier instant to jusqu'à l'instant du présent t.

En référence à la FIG.7B, ce dispositif comprend ensuite un premier ensemble 190, que l'on peut appeler ensemble de filtrage temporel causal, pour effectuer l'évaluation, à partir des échantillons causals bruités prélevés dans le temps de to à t-1, à la localisation donnée x,y, du dernier échantillon causal filtré $P_{t-1}^C$ par un filtrage linéaire, avec des poids associés aux échantillons qui sont, soit constants, soit de préférence fonctions des coefficients $\alpha_j^C$ de probabilité d'absence de discontinuité comme décrit plus haut.

Des filtres récursifs ou non récursifs, appropriés à réaliser un filtrage linéaire, sont connus de l'homme du métier et ne sont pas décrits plus avant. Un tel filtre linéaire 190 pour effectuer ce filtrage causal a une entrée 189 pour les échantillons causals bruités $I_j^C$ et une entrée 188 pour les poids $b_j^C$ constants ou sous la forme préférée de produits des $\alpha_j^c$ et fournit à sa sortie 204 le dernier échantillon causal filtré $P_{t-1}^C$, et à sa sortie 205, dans la forme préférée, la somme des poids

$$\sum_{j=to}^{j=t-1} b_j^c$$

sous la forme inverse qui est posée égale à $K_{t-1}^C$.

Ce dispositif comprend ensuite des moyens classiques non représentés, car à la portée de tout homme du métier, pour évaluer l'écart type du bruit $\sigma_B\sqrt{2}$ à partir de la variance du bruit $\sigma_B^2$ des échantillons des différences $\Delta1$, $\Delta2$.

En référence à la FIG.7A, le dispositif de filtrage temporel pour diminuer les pics de bruit comprend essentiellement un ensemble 200 incluant des entrées qui sont :

une entrée 99 pour le dernier échantillon bruité causal

$$I_{t-1}^C,$$

une entrée 100 pour l'échantillon bruité du présent $I_t^P$,
une entrée 204 pour le dernier échantillon causal filtré $P_{t-1}^C$ provenant du filtre linéaire causal 190,
une entrée 205 pour la valeur $K_{t-1}^C$ provenant du filtre linéaire causal 190,
une entrée 206 pour les valeurs évaluées de l'écart type du bruit $\sigma_B$,
une sortie 301 pour l'échantillon filtré du présent $P_t^P$ où le bruit et les pics de bruit sont éliminés de façon extrêmement rigoureuse.

Dans l'ensemble 200, se trouvent :

un premier sous-ensemble 210 pour évaluer la probabilité $\beta_t^P$ d'absence de pics de bruit,
et un deuxième sous-ensemble 220 pour évaluer finalement l'échantillon temporellement filtré du présent $P_t^P$.

Le premier sous-ensemble reçoit l'échantillon bruité du présent $I_t^P$ et le filtre spatialement par le filtre spatial G, en 101, pour fournir l'échantillon lissé du présent $G_t^P$. Ce premier sous-ensemble reçoit aussi le dernier échantillon causal filtré $I_{t-1}^C$ et la valeur évaluée de l'écart type du bruit $\sigma_B$.

L'échantillon bruité du présent $I_t^P$ et l'échantillon lissé du présent $G_t^P$ sont portés dans un premier additionneur 103 qui fournit la première différence $\Delta1$ ; l'échantillon bruité du présent $I_t^P$ et le dernier échantillon causal bruité $I_{t-1}^C$ sont portés dans un deuxième additionneur 104 qui fournit la deuxième différence $\Delta2$. Les différences $\Delta1$ et $\Delta2$ sont entrées dans des Tables (L.U.T) respectivement 105 et 106, de même que la valeur de l'écart du bruit $\sigma_B$ pour fournir lesdites différences normalisées par l'écart du bruit selon les relations respectives (14) et (15).

Le signe des différences normalisées est comparé dans le comparateur de signe 107 qui fournit un signal 0 ou 1 pour imposer que la valeur de la mesure de présomption de présence de pic de bruit $Z_t^P$ soit évaluée :

0 si les signes sont différents,
et $\neq 0$ si les signes sont identiques.

Les valeurs des différences $\Delta1$, $\Delta2$ normalisées sont portées respectivement dans des blocs 108, 109 d'évaluation des valeurs absolues ; à la suite de quoi, la probabilité $\beta_t^P$ est calculée dans la Table (L.U.T) 110, selon la commande du comparateur 107, comme une fonction $F_t^P$ non strictement décroissante de la valeur de présomption $Z_t^P$ selon la relation (10).

Le second sous-ensemble 220 reçoit l'échantillon bruité du présent $I_t^P$, le dernier échantillon causal filtré $P_{t-1}^C$, et l'inverse de la somme des poids causals notée $K_{t-1}^C$ comme déjà décrit. Ce second sous-ensemble 220 comprend une Table 111 (L.U.T) où sont portées la valeur de la probabilité d'absence de pic $\beta_t^P$, et la valeur de l'inverse de la somme des poids causals $K_{t-1}^C$, pour fournir le poids $W_t^P$ évalué selon la relation (23).

Ce second sous-ensemble comprend ensuite des additionneurs 112, 114 et un multiplieur 113 pour évaluer l'échantillon filtré du présent $P_t^C$ en utilisant la relation (24b). A cet effet, l'additionneur 112 reçoit l'échantillon bruité du présent $I_t^P$ et le dernier échantillon causal filtré $P_{t-1}^P$ et fournit la différence $I_t^P - P_{t-1}^P$ qui est multipliée par le poids $W_t^P$ dans le multiplieur 113 dont la sortie est ajoutée, par le moyen de l'additionneur 114 au dernier échantillon causal filtré $P_{t-1}^P$. Il en résulte la valeur de l'échantillon filtré du présent $P_t^P$ disponible à la sortie 301 du sous-ensemble 220, conformément à la formule (24b).

**Revendications**

1. Procédé de filtrage temporel du bruit dans une image d'une séquence d'images numérisées en forme de matrices bidimensionnelles de pixels, formées depuis un premier instant (to) jusqu'à un dernier instant (t), ces pixels ayant des valeurs d'intensité correspondant à chaque instant appelées échantillons, ce procédé comprenant une évaluation, pour une localisation donnée de pixel, d'un échantillon du dernier instant temporellement filtré ($PP_t$), en effectuant une combinaison appelée première combinaison de l'échantillon de l'avant-dernier instant temporellement filtré ($P_{t-1}^C$) affecté d'un premier poids ($W_1$) et de l'échantillon bruité du dernier instant ($I_t^P$) modulé par un second poids ($W_2$) qui est une fonction d'une valeur de probabilité ($\beta_t^P$) d'absence de pic de bruit sur cet échantillon.

2. Procédé selon la revendication 1, comprenant une évaluation d'une mesure de présomption de présence de pic de bruit ($Z_t^P$), supérieure ou égale à 0, comme la valeur minimale entre une première valeur absolue de la différence entre l'échantillon bruité du dernier instant ($I_t^P$) et cet échantillon spatialement lissé ($G_t^P$), et une deuxième valeur absolue de la différence entre les échantillons bruités des dernier ($I_t^P$) et avant-dernier instants ($I_{t-1}^C$), et une détermination du second poids ($W_2$) par évaluation de ladite fonction de la valeur de probabilité ($\beta_t^P$) d'absence de pic de bruit sur l'échantillon du dernier instant comme une fonction ($F_t^P$) non strictement décroissante, supérieure à 0 et inférieure ou égale à 1, de la mesure de présomption de présence de pic de bruit ($Z_t^P$).

3. Procédé selon la revendication 2, selon lequel chacune des première et seconde valeurs absolues des différences est normalisée par un écart type du bruit évalué sur les échantillons pris en compte dans lesdites différences.

4. Procédé selon l'une des revendications 1 à 3, comprenant une évaluation de l'échantillon temporellement filtré de l'avant-dernier instant ($P_{t-1}^C$) en effectuant une combinaison appelée seconde combinaison des échantillons bruités ($I_j^C$) du premier instant à l'avant-dernier instant de la séquence, affectés respectivement de poids appelés poids causaux ($b_j^C$), et ladite seconde combinaison étant normalisée par la somme desdits poids causaux.

5. Procédé selon la revendication 4, comprenant une évaluation du poids ($W_1$) pour appliquer à l'échantillon ($P_{t-1}^C$) temporellement filtré de l'avant-dernier instant dans ladite première combinaison comme la valeur de la somme des poids causaux

$$\left( \sum_{j=to}^{j=t-1} b_j^C = W_1 \right)$$

de la seconde combinaison, et une normalisation de ladite première combinaison par la somme des premier et second poids ($W_1+W_2$).

6. Procédé selon la revendication 5, comprenant une évaluation d'un troisième poids ($W_t^P$) donnée par un quotient du second poids ($W_2$) par la somme des premier et second poids ($W_1+W_2$), et une évaluation de l'échantillon temporellement filtré du dernier instant ($P_t^P$) en effectuant une combinaison appelée troisième combinaison de l'échantillon ($P_{t-1}^C$) temporellement filtré de l'avant-dernier instant et d'une différence de l'échantillon bruité ($I_t^P$) du dernier instant et de l'échantillon ($P_{t-1}^C$) temporellement filtré de l'avant-dernier instant, différence modulée par ledit troisième poids ($W_t^P$).

7. Dispositif pour mettre en oeuvre un procédé selon l'une des revendications 1 à 6, comprenant un système pour fournir une suite d'échantillons bruités (Ij) relatifs à une localisation donnée de pixels dans des images successives d'une séquence d'images ayant la forme de matrices bidimensionnelles de pixels, depuis un premier instant (to) jusqu'à un dernier instant (t), un premier ensemble (190) de calcul pour fournir un échantillon filtré temporellement ($P_{t-1}^C$) de l'avant-dernier instant (t-1), et un second ensemble (200) de calcul comprenant un premier sous-ensemble (210) incluant des modules de calcul pour évaluer une fonction d'une valeur de probabilité ($\beta_t^P$) d'absence de pic de bruit sur l'échantillon bruité du dernier instant ($I_t^P$), et un second sous-ensemble (220) incluant des modules de calcul pour évaluer une première combinaison de l'échantillon temporellement filtré ($P_{t-1}^C$) de l'avant-dernier instant affecté d'un premier poids ($W_1$) et de l'échantillon bruité ($I_t^P$) du dernier instant affecté d'un deuxième poids ($W_2$) déterminé par la fonction de la valeur de probabilité ($\beta_t^P$), cette première combinaison étant normalisée par la somme du premier et du deuxième poids.

8. Dispositif selon la revendication 7, comprenant dans le premier ensemble de calcul (190), des moyens pour évaluer l'échantillon temporellement filtré ($P_{t-1}^C$) de l'avant-dernier instant comme une seconde combinaison des échantillons bruités ($I_j^C$) antérieurs au dernier instant affectés de poids respectifs ($b_j^C$) appelés poids causaux, et normalisée par la somme desdits poids causaux, et comprenant dans le deuxième ensemble de calcul (200), des moyens pour évaluer le premier poids ($W_1$) affecté à l'échantillon temporellement filtré ($P_{t-1}^C$) de l'avant-dernier instant comme la somme desdits poids causaux

$$\left( \sum_{j=to}^{j=t-1} b_j^C = W_1 \right).$$

9. Dispositif pour le traitement d'images médicales comprenant un système pour fournir des données d'une image sous forme de matrice bidimensionnelle de pixels ayant des valeurs d'intensité numérisées, un système d'affichage des données, un système de traitement d'image ayant accès aux données d'image et au système d'affichage, ce système de traitement d'images incluant un dispositif selon l'une des revendications 7 ou 8.

**Patentansprüche**

1. Verfahren zur Zeitfilterung des Rauschens eines Bildes aus einer Sequenz von numerischen Bildern in der Form von zweidimensionalen Pixelmatrizen, gebildet von einem ersten Zeitpunkt (to) bis zu einem letzten Zeitpunkt (t), wobei diese Pixel Intensitätswerte haben, die jedem Zeitpunkt entsprechen, mit der Bezeichnung Muster, dieses Verfahren für eine bestimmte Pixellokalisierung eine Bewertung eines Musters des letzten gefilterten temporären Zeitpunkts ($P_t^P$) beinhaltet, unter Vornahme einer Kombination mit der Bezeichnung erste Kombination des Musters des vorletzten gefilterten temporären Zeitpunkts ($P_{t-1}^C$), einem ersten Stellenwert ($W_1$) zugeteilt, und des verrauschten Musters des letzten Zeitpunkts ($I_t^P$), moduliert von einem zweiten Stellenwert ($W_2$), der eine Funktion eines Wahrscheinlichkeitswertes $\beta_t^P$) für die Abwesenheit einer Rauschspitze an diesem Muster ist.

2. Verfahren nach Anspruch 1, mit einer Bewertung einer Wahrscheinlichkeitsmessung für die Anwesenheit einer Rauschspitze ($Z_t^P$), größer oder gleich 0, wie der Mindestwert zwischen einem ersten absoluten Wert der Differenz zwischen dem verrauschten Muster des letzten Zeitpunkts ($I_t^P$) und diesem räumlich geglätteten Zeitpunkt ($G_t^P$), und einem zweiten absoluten Wert der Differenz zwischen den verrauschten Mustern des letzten ($I_t^P$) und vorletzten Zeitpunkts ($I_{t-1}^C$), und einer Bestimmung des zweiten Stellenwerts ($W_2$) durch Bewertung der besagten Funktion des Wahrscheinlichkeitswerts ($\beta_t^P$) für die Abwesenheit einer Rauschspitze am Muster des letzten Zeitpunkts als eine nicht strikt abnehmende Funktion ($F_t^P$), größer als 0 und kleiner oder gleich 1 zur Wahrscheinlichkeitsmessung für die Anwesenheit einer Rauschspitze ($Z_t^P$).

3. Verfahren nach Anspruch 2, nach dem jeder erste und zweite absolute Wert der Differenzen durch eine Standardabweichung des Rauschens mit den in den besagten Differenzen berücksichtigten Mustern normalisiert ist.

4. Verfahren nach einem der Ansprüche 1 bis 3, mit einer Bewertung des gefilterten temporären Musters des vorletzten Zeitpunkts ($P_{t-1}^C$) unter Vornahme einer Kombination mit der Benennung zweite Kombination der verrauschten Muster ($I_j^C$) des ersten Zeitpunkts im vorletzten Zeitpunkt der Sequenz, jeweils mit Kausalstellenwert ($b_j^C$) bezeichneten Stellenwerten zugeteilt, wobei die zweite Kombination mit der Summe der besagten Kausalstellenwerte normalisiert wird.

5. Verfahren nach Anspruch 4, mit einer Bewertung des Stellenwerts ($W_1$), um auf ein gefiltertes temporäres Muster ($P_{t-1}^C$) des vorletzten Zeitpunkts in der besagten ersten Kombination den Wert der Summe der Kausalstellenwerte

$$\left( \sum_{j=to}^{j=t-1} b_j^C = W_1 \right)$$

der zweiten Kombination und eine Normalisierung der besagten ersten Kombination mit der Summe der ersten und zweiten Stellenwerte ($W_1 + W_2$) anzuwenden.

6. Verfahren nach Anspruch 5, mit einer Bewertung eines dritten Stellenwerts ($W_t^P$), gegeben von einem Quotienten

des zweiten Stellenwerts ($W_2$) durch die Summe des ersten und zweiten Stellenwerts ($W_1 + W_2$), und einer Bewertung des gefilterten temporären Musters des letzten Zeitpunkts ($P_t^P$) unter Vornahme einer Kombination mit der Bezeichnung dritte Kombination des gefilterten temporären Musters ($P_{t-1}^C$) des vorletzten Zeitpunkts und einer Differenz zwischen dem verrauschten Muster ($I_t^P$) des vorletzten Zeitpunkts und des gefilterten temporären Musters ($P_{t-1}^C$) des vorletzten Zeitpunkts, mit dem besagten dritten Stellenwert ($W_t^P$) modulierte Differenz.

7. Vorrichtung zur Ausführung eines Verfahrens nach einem der Ansprüche 1 bis 6, mit einem System zur Bereitstellung einer Folge von verrauschten Mustern ($I_j$) in Bezug auf eine bestimmte Lokalisierung von Pixeln in aufeinanderfolgenden Bildern einer Bildsequenz mit der Form von zweidimensionalen Pixelmatrizen ab dem ersten Zeitpunkt (to) bis zum letzten Zeitpunkt (t), einer ersten Recheneinheit (190) zur Bereitstellung eines temporären gefilterten Musters ($P_{t-1}^C$) des vorletzten Zeitpunkts (t-1) und einer zweiten Recheneinheit (200) mit einer ersten Untereinheit (210) mit Rechenmodulen, um eine Funktion eines Wahrscheinlichkeitswertes ($\beta_t^P$) für die Abwesenheit einer Rauschspitze am verrauschten Muster des letzten Zeitpunkts ($I_t^P$) zu bewerten, und einer zweiten Untereinheit (220) mit Rechenmodulen zur Bewertung einer ersten Kombination gefilterter temporärer Muster ($P_{t-1}^C$) des vorletzten, einem ersten Stellenwert ($W_1$) zugeteilten Zeitpunkts und dem verrauschten Muster ($I_t^P$) des letzten, einem zweiten Stellenwert ($W_2$) zugeteilten Zeitpunkts, bestimmt durch die Funktion des Wahrscheinlichkeitswertes ($\beta_t^P$), wobei diese erste Kombination mit der Summe des ersten und des zweiten Stellenwerts normalisiert wird.

8. Vorrichtung nach Anspruch 7, mit in der ersten Recheneinheit (190) Verfahren zur Bewertung des gefilterten temporären Musters ($P_{t-1}^C$) des vorletzten Zeitpunkts als eine zweite Kombination der verrauschten Muster ($I_j^C$) vor dem letzten Zeitpunkt, einem jeweiligen Stellenwert ($b_j^C$) mit der Bezeichnung Kausalstellenwert, zugeteilt und normalisiert mit der Summe der besagten Kausalstellenwerte, und mit in der zweiten Recheneinheit (200) Verfahren zur Bewertung des ersten Stellenwerts ($W_1$), dem gefilterten temporären Muster ($P_{t-1}^C$) des vorletzten Zeitpunkts als Summe der Kausalstellenwerte

$$\left( \sum_{j=to}^{j=t-1} b_j^C = W_1 \right)$$

zugeteilt.

9. Vorrichtung zur Verarbeitung medizinischer Bilder mit einem System zur Bereitstellung der Daten eines Bildes in der Form einer zweidimensionalen Pixelmatrix mit numerischen Intensitätswerten, einem Datenanzeigesystem, einem Bildverarbeitungssystem mit einem Zugang zu den Bilddaten und zum Anzeigesystem, wobei dieses System zur Bildverarbeitung eine Vorrichtung nach einem der Ansprüche 7 oder 8 beinhaltet.

**Claims**

1. A method for the temporal filtering of the noise in an image of a sequence of digital images in the form of two-dimensional matrices of pixels, formed as from a first instant (to) until a last instant (t), said pixels having intensity values which correspond to each instant and are referred to as samples, which method includes an evaluation, for a given pixel location, of a temporally filtered sample ($P_t^p$) of the last instant by means of a combination called first combination of the temporally filtered sample ($P_{t-1}^c$) of the last instant but one, whereto a first weight ($W_1$) has been assigned, and the noisy sample ($I_t^p$) of the last instant, modulated by a second weight ($W_2$) which is a function of a probability value ($\beta_t^p$) concerning absence of a noise peak in this sample.

2. A method as claimed in claim 1, including an evaluation of a presumptive measure of presence of a noise peak ($Z_t^p$), larger than or equal to 0, as the minimum value between a first absolute value of the difference between the noisy sample ($I_t^p$) of the last instant and this spatially smoothed sample ($G_t^p$), and a second absolute value of the difference between the noisy samples of the last instant ($I_t^p$) and the last instant but one ($I_{t-1}^c$), and a determination of said second weight ($W_2$) by an evaluation of said function of the probability value ($\beta_t^p$) concerning absence of a noise peak in the sample of the last instant as a non-strictly decreasing function ($F_t^p$), larger than 0 and smaller than or equal to 1, of the presumptive measure of presence of a noise peak ($Z_t^p$).

3. A method as claimed in claim 2, in which each of the first and second absolute values of the differences is normalized by a noise standard deviation evaluated for the samples taken into account in said differences.

4. A method as claimed in one of the claims 1 to 3, including an evaluation of the temporally filtered sample ($P_{t-1}^c$) of the last instant but one by means of a combination called second combination of the noisy samples ($I_j^c$) from the first instant until the last instant but one of the sequence whereto respective so-called causal weights ($b_j^c$) have been assigned, said second combination being normalized by the sum of said causal weights.

5. A method as claimed in claim 4, including an evaluation of the first weight ($W_1$) for application to the temporally filtered sample ($P_{t-1}^c$) of the last instant but one in said first combination as the value of the sum of the causal weights

$$( \sum_{j=to}^{j=t-1} b_j^c = W_1 )$$

of the second combination, and normalization of said first combination by the sum of the first and the second weights ($W_1+W_2$).

6. A method as claimed in claim 5, including an evaluation of a third weight ($W_t^p$) which is given by a quotient of the second weight ($W_2$) and the sum of the first and the second weights ($W_1+W_2$), and an evaluation of the temporally filtered sample ($P_t^p$) of the last instant by means of a combination called third combination of the temporally filtered sample ($P_{t-1}^c$) of the last instant but one and a difference between the noisy sample ($I_t^p$) of the last instant and the temporally filtered sample ($P_{t-1}^c$) of the last instant but one, said difference being modulated by said third weight ($W_t^p$).

7. A device for carrying out a method as claimed in one of the claims 1 to 6, including a system for supplying a series of noisy samples ($I_j$) relating to a given pixel location in successive images of a sequence of images in the form of two-dimensional matrices of pixels, from a first instant (to) until a last instant (t), a first calculation assembly (190) for supplying a temporally filtered sample ($P_{t-1}^c$) of the last instant but one (t-1), and a second calculation assembly (200) which includes a first sub-assembly (210) with calculation modules for evaluating a function of a probability value ($\beta_t^p$) concerning absence of a noise peak in the noisy sample ($I_t^p$) of the last instant, and a second sub-assembly (220) with calculation modules for evaluating a first linear combination of the temporally filtered sample ($P_{t-1}^c$) of the last instant but one whereto a first weight ($W_1$) has been assigned and the noisy sample ($I_t^p$) of the last instant whereto a second weight ($W_2$), determined by said function of the probability value ($\beta_t^p$), has been assigned, said first combination being normalized by the sum of the first and the second weights.

8. A device as claimed in claim 7, in which the first calculation assembly (190) includes means for evaluating the temporally filtered sample ($P_{t-1}^c$) of the last instant but one as a second combination of noisy samples ($I_j^c$) preceding the last instant, whereto respective so-called causal weights ($b_j^c$) have been assigned, and normalized by the sum of said causal weights, and in which the second calculation assembly (200) includes means for evaluating the first weight ($W_1$) assigned to the temporally filtered sample ($P_{t-1}^c$) of the last instant but one as the sum of said causal weights

$$( \sum_{j=to}^{j=t-1} b_j^{\,c} = W_1 ).$$

9. A device for the processing of medical images, including a system for supplying data of an image in the form of a two-dimensional matrix of pixels having digitized intensity values, a system for the display of data, an image processing system which has access to the image data and to the display system, said image processing system including a device as claimed in one of the claims 7 or 8.

**FIG.1**

**FIG.2**

FIG.3A

FIG.3B

FIG. 4 A

FIG. 4 B

$A_t(x-1,y)$ $A_t(x,y)$ $A_t(x+1,y)$

$J_t$

$\Omega_t(x,y)$

**FIG.5A**

$V$ $A_t(x,y)$ $X1$

$J_t$

$H$

$\Omega_t(x,y)$

$X2$

**FIG.5B**

$\beta_t^p$

1

$\beta_{MIN}^p$ 0.10

0

0 1 2 $Z_t^p$

**FIG.6**

189 $I_j^c$

188 $b_j^c$

CAUSAL FILT.

190

204 $P_{t-1}^c$

205 $K_{t-1}^c$

**FIG.7B**

FIG.7A